# EUROPÄISCHE PATENTSCHRIFT

(11) **EP 1 856 169 B1**
(45) Veröffentlichungstag und Bekanntmachung des Hinweises auf die Patenterteilung: **11.05.2011**
(21) Anmeldenummer: 06724979.7
(22) Anmeldetag: 08.03.2006
(51) Int. Cl.: C08F 220/18, C08F 220/22, C08F 2/46, G02B 6/00

(54) **ABFORMZUSAMMENSETZUNG ZUR HERSTELLUNG VON PRÄZISIONSOPTIK**
MOULDING COMPOSITION FOR PREPARATION OF PRECISION OPTICS
COMPOSITION À MOULER POUR PRÉPARER DES ÉLÉMENTS OPTIQUES DE PRÉCISION

(30) Priorität: 10.03.2005 EP 05101887
(43) Veröffentlichungstag der Anmeldung: 21.11.2007
(73) Patentinhaber: Nanogate Industrial Solutions GmbH, 66287 Quierschied-Göttelborn (DE)
(72) Erfinder: KLENKE, Martin, 66440 Blieskastel (DE); BENTHIEN, Thomas, 66125 Saarbrücken (DE)
(74) Vertreter: von Kreisler Selting Werner
(86) Internationale Anmeldenummer: PCT/EP2006/060563
(87) Internationale Veröffentlichungsnummer: WO 2006/094997

(56) Entgegenhaltungen:
- EP-A- 0 333 464
- EP-A- 1 635 201
- WO-A-92/21492
- US-A- 4 511 209
- US-A- 5 343 544

## Beschreibung

Die Erfindung betrifft eine Abformzusammensetzung, einen daraus hergestellten Formkörper und ein Verfahren zum Erzeugen dieses Formkörpers mit einer Oberflächenstruktur.

Bekannte Beleuchtungseinrichtungen für Displays beispielsweise von mobilen Anwendungen weisen eine Lichtquelle auf, bei der es sich beispielsweise um eine röhrenförmige Lichtquelle (CCFL) handelt. Das von der Lichtquelle abgegebene Licht wird an einer Stirnseite eines im Querschnitt keilförmigen oder quaderförmigen Formkörpers in diesen eingekoppelt. Insbesondere auf Grund der keilförmigen Ausgestaltung des Formkörpers erfolgt eine Totalreflektion der Lichtstrahlen an der Phasengrenze und durch entsprechende Streuzentren ein Austreten der Lichtstrahlen an der Oberfläche des keilförmigen Formkörpers. Die Oberfläche des keilförmigen Formkörpers ist hierbei dem zu durchleuchtenden Display gegenüberliegend angeordnet. Die Oberfläche des Formkörpers ist derart strukturiert, dass durch Refraktion das Licht aus dem Lichtleiter austritt. Das so gebrochene Licht wird durch mehrere Folien, die zwischen dem Formkörper und dem Display angeordnet sind, kollimiert und derart gelenkt, dass ein im Wesentlichen weißes Licht zu dem Display gelangt. Der Aufbau derartiger Beleuchtungseinrichtungen ist kompliziert, zumal mehrere Folien beispielsweise in einen Rahmen oder dergleichen eingelegt werden müssen und sichergestellt werden muss, dass ein Verrutschen oder dergleichen der Folien vermieden ist. Auf Grund des komplizierten Aufbaus sind die Herstellungskosten hoch. Ferner besteht die Gefahr von Funktionsstörungen.

Zusammensetzung, die verschiedene Acrylate enthalten sind bekannt.

EP 0478 261 A2 beschreibt definierte Zusammensetzungen enthaltend bis zu 45 Gew.% eines teilfluorierten Acrylats.

US 4,511,209 A beschreibt Zusammensetzungen, die entweder mehr als 9 Gew.% Photoinitiator oder weniger als 50 Gew.% teilfluoriertes Acrylat enthalten.

WO 92/21492 A1 beschreibt Zusammensetzungen, die mehr als 5 Gew.% Photoinitiator enthalten.

EP 0 536 743 A1 beschreibt Zusammensetzungen, die weniger als 50 Gew.% teilfluoriertes Acrylat oder weniger als 24,9 Gew.% nichtfluoriertes Acrylat enthalten.

EP 0 333 464 A1 beschreibt Zusammensetzungen, die spacerfreie perfluorierte Acrylate enthalten.

EP 0196212 A2 beschreibt ebenfalls Zusammensetzungen mit spacerfreien perfluorierten Acrylaten.

Aufgabe der Erfindung ist es, eine Abformzusammensetzung sowie ein Verfahren zum Erzeugen einer Oberflächenstruktur eines Formkörpers zu schaffen, mit der beziehungsweise mit dem eine zuverlässige und kostengünstige Herstellung ohne zusätzlich notwendige Folien möglich ist.

In einer ersten Ausführungsform wird die der Erfindung zu Grunde liegende Aufgabe gelöst durch eine lösungsmittelfreie Abformzusammensetzung mit einer Dichte in einem Bereich von 1 bis 1,5 g/ml, enthaltend
a) 50 bis 65 Gew.% wenigstens eines 1H, 1H, 2H, 2H-Perfluoroalkylacrylats mit einer Kettenlänge des Alkylrestes von 6 bis 12 C-Atomen,
b) 24,9 bis 45 Gew.% wenigstens eines nichtfluorierten Acrylats und
c) 0,1 bis 5 Gew.% wenigstens eines Photoinitiators.

Erfindungsgemäß wird bei der Erzeugung einer Oberflächenstruktur eines Formkörpers die Abformzusammensetzung auf eine Negativ-Gussform und/oder ein Formkörper aufgebracht. Hierbei weist die Negativ-Gussform vorzugsweise die auf Der Formkörper als Substrat zu übertragende Oberflächenstruktur als Negativform auf. Die Übertragung der Oberflächenstruktur erfolgt mit Hilfe der aushärtbaren Abformzusammensetzung, das sich nach dem Aushärten mit der Oberfläche des Formkörpers verbindet. Hierbei handelt es sich bei dem Formkörper um ein vorzugsweise aus einem transparenten Material, insbesondere transparentem Kunststoff hergestelltes Substrat. Die transparenten Kunststoffe umfassen vorzugsweise solche aus der Gruppe Methacrylat Polymere (beispielsweise PMMA), Polycarbonate, cyclische Olefinpolymere, Styrolpolymere, Polyacrylate, Polyethersulfone und/oder Polyimide. Der Formkörper kann auch aus Glas bestehen.

Perfluorierte Acrylate im Sinne der vorliegenden Erfindung umfassen vorzugsweise lineare, verzweigte und/oder cyclische Alkylacrylate oder Mischungen dieser Acrylate, bei denen insbesondere die an die Acrylatfunktion angrenzenden beiden Kohlenstoffatome (Spacer) nicht fluoriert sind und bei denen die Reste der Alkylketten zwischen 6 und 12 Kohlenstoffatome aufweisen. Das perfluorierte Acrylat ist ein Perfluoroalkylethylacrylat (beispielsweise Fluowet® AC 600 der Firma Clariant), wobei die Ethylgruppe nicht fluoriert ist und der perfluorierte Alkylrest 4 bis 10 Kohlenstoffatome aufweist. Sind die Alkylketten länger, so ist die Entformbarkeit unter Umständen nicht mehr gegeben oder es bilden sich gegebenenfalls zwei Phasen der perfluorierten und der nichtfluorierten Acrylatmonomere aus. Kommt es zur Ausbildung von zwei oder mehr Phasen in der Zusammensetzung der Monomere, so kann dies zu einer höheren Lichtstreuung (Haze) in der ausgehärteten Schicht führen. Sind die Alkylketten jedoch kürzer, so kann die resultierende Abformzusammensetzung zu niederviskos sein.

Die Molmasse der perfluorierten Acrylatmonomere liegt daher vorzugsweise in einem Bereich von 350 bis 500 g/mol. Liegt die Molmasse oberhalb dieses Bereiches, so kann die resultierende Abformzusammensetzung leicht eine zu hohe Viskosität erhalten, wodurch es zu einer verstärkten Bildung von Fehlbildungen und Artefakten der Oberflächenelemente kommen kann. Liegt die Molmasse unterhalb dieses Bereiches, so kann die resultierende Abformzusammensetzung leicht eine zu niedrige Viskosität erhalten, wodurch es zu einer zu geringen Schichtdicke der Schicht als Teil des erfindungsgemäßen Formkörpers kommen kann.

Vorteilhafterweise liegt der Schmelzpunkt der erfindungsgemäßen perfluorierten Acrylatmonomere in einem Bereich von 15 bis 40 °C. Dadurch dass die Abformzusammensetzung vorzugsweise bei Raumtemperatur eingesetzt wird, kann durch die Wahl des Schmelzpunktes der perfluorierten Acrylatmonomere im bevorzugten Bereich nahe der Raumtemperatur zusätzlich die Viskosität der Abformzusammensetzung gesteuert werden.

Nichtfluorierte Acrylate im Sinne der Erfindung sind vorzugsweise lineare, verzweigte und/oder cyclische Alkylacrylate oder Mischungen dieser Acrylate. Besonders bevorzugt werden Monomere mit zwei oder mehr Acrylatfunktionen und/oder zwei oder mehr Alkoholgruppen und/oder mindestens einer Etherbrücke (beispielsweise Dipropylenglykoldiacrylat, Diethylenglykol-diacrylat, 1,6-Hexandioldiacrylat, Tetraethylenglykoldiakrylat, Triethylenglykol-diacrylat, Tripropylendiacrylat, alkoxyliertes Hexandioldiacrylat, oder Esterdioldiacrylat oder Mischungen dieser Monomere), da diese Monomere dank ihrer mehrfachen Funktionalität in besonders stabilen und optisch einwandfreien Schichten als Teil des erfindungsgemäßen Formkörpers resultieren. Vorteilhafterweise weisen die Alkylketten zwischen 6 und 12 Kohlenstoffatome auf. Sind die Alkylketten länger, so bilden sich leicht zwei Phasen der teilfuorierten und der nichtfluorierten Acrylatmonomere aus. Sind die Alkylketten jedoch kürzer, so kann die resultierende Abformzusammensetzung zu niederviskos sein.

Die Molmasse der erfindungsgemäßen nichtfluorierten Acrylatmonomere liegt vorzugsweise in einem Bereich von 150 bis 340 g/mol. Liegt die Molmasse der perfluorierten Acrylatmonomere oberhalb dieses Bereiches, so kann die resultierende Abformzusammensetzung leicht eine zu hohe Viskosität erhalten, wodurch es zu einer verstärkten Bildung von Fehlbildungen und Artefakten der Oberflächenelemente kommen kann. Liegt die Molmasse unterhalb dieses Bereiches, so kann die resultierende Abformzusammensetzung leicht eine zu niedrige Viskosität erhalten, wodurch es zu einer zu geringen Schichtdicke der Schicht als Teil des erfindungsgemäßen Formkörpers kommen kann.

Photoinitiatoren im Sinne der Erfindung sind vorzugsweise Phenylketonderivate (beispielsweise Irgacure® 184 und/oder Irgacure® 819 der Firma Ciba Spezialitätenchemie Lampersheim GmbH), da diese besonders geringen negativen Einfluss auf die optischen Eigenschaften des resultierenden erfindungsgemäßen Formkörpers haben.

Vorzugsweise enthält die Abformzusammensetzung 55 bis 60 Gew.% eines perfluorierten Acrylats oder einer Mischung aus verschiedenen perfluorierten Acrylaten, da sich bei einem zu hohen wie bei einem zu geringen Gehalt des perfluorierten Acrylats leicht Phasentrennungen der teilfuorierten und der nichtfluorierten Acrylatmonomere ausbilden können.

Die Abformzusammensetzung enthält vorteilhafterweise 34,9 bis 45 Gew.% eines nichtfluorierten Acrylats oder einer Mischung aus verschiedenen nichtfluorierten Acrylaten. Bei geringerem Gehalt an nichtfluorierten Acrylaten wurde eine verstärkte Bildung von zweiphasigen Abformzusammensetzungssystemen beobachtet. Durch die Ausbildung von Phasentrennungen in der Zusammensetzung der Monomere kommt es zu einer höheren Lichtstreuung (Haze) in der ausgehärteten Schicht. Bei einem höheren Anteil an nichtfluorierten Acrylaten kam es zu einer stärkeren Haftung der ausgehärteten Abformzusammensetzung mit der Negativ-Gussform und dadurch zu Problemen bei der Entformung.

Vorteilhafterweise enthält die Abformzusammensetzung 1 bis 2 Gew.% eines Photoinitiators oder einer Mischung verschiedener Photoinitiatoren. Hierdurch wird eine besonders gute Vernetzung der Monomere und damit eine bessere optische Qualität und mechanische Belastbarkeit bewirkt.

Vorzugsweise weist die Abformzusammensetzung eine Viskosistät von 2 bis 30 mPas (cP) bei Raumtemperatur auf. Hierdurch kann die Oberflächenstruktur der Negativ-Gussform beziehungsweise der Negativ-Gussform besonders exakt abgebildet werden. Die Viskosität kann bei 25 °C mit einem Brookfield Viskosimeter bei einer Umdrehungsgeschwindigkeit von 900 U/min und einer CAP-1 Spindel und einem Probenvolumen von 67 µl gemessen werden.

Vorzugsweise ist die Abformzusammensetzung einphasig und/oder homogen und weist eine Dichte in einem Bereich von 1 bis 1,5 g/ml auf. Dadurch weist die Abformzusammensetzung eine höhere Dichte als übliche organische Zusammensetzungen und Flüssigkeiten auf und kann etwaig vorhandene organische Flüssigkeiten aus der Negativ-Gussform verdrängen. So können wiederum Fehlausbildungen der gehärteten Schicht mit den Oberflächenelementen vermieden werden.

Die Abformzusammensetzung ist frei von Lösungsmittel da dies nicht nur zu einem umweltfreundlicheren Herstellungsverfahren führt, sondern auch das bei der Aushärtung möglicherweise entweichende Lösungsmittel zu Defekten in der Oberflächenstruktur des erfindungsgemäßen Formkörpers führen kann.

### Ausführungsbeispiel:

11 g 1H, 1H, 2H, 2H-Perfluoroctylacrylat wurden mit 8 g Dipropylenglykol-diacrylat, 0,1 g Irgacure® 819 und 0,2 g Irgacure® 184 der Firma Ciba Spezialitätenchemie Lampersheim GmbH vermischt. 60 µl dieser Mischung wurde auf eine 2 x 2 cm große Nickelplatte aufgebracht, auf deren Oberfläche eine Negativform eines Formkörpers mit Streuzentren ausgebildet ist. Anschließend wurde ein 1 mm dickes und 1 x 1 cm großes Plättchen aus PMMA auf Oberfläche der Mischung auf der Nickelplatte aufgebracht. Daraufhin wurde der so erhaltene Sandwich auf der Nickelplatte mit dem dazwischen befindlichen Gemisch für 2 Sekunden UV-Strahlung einer handlesüblichen UV-Quecksilberlampe ausgesetzt. Anschließend wurde das Substrat mit der damit verbundenen gehärteten Abformzusammensetzung von der Negativ-Gussform entnommen. Das Herstellungsverfahren gleicht im Wesentlichen dem Herstellungsverfahren von Lichtleitelementen, welches in der Europäischen Patentanmeldung 05003358.8 beschrieben ist, auf die vollumfänglich Bezug genommen wird.

## Patentansprüche

1. Lösungsmittelfreie Abformzusammensetzung mit einer Dichte in einem Bereich von 1 bis 1,5 g/ml, enthaltend
a) 50 bis 65 Gew.% wenigstens eines 1H, 1H, 2H, 2H-Perfluoroalkylacrylats mit einer Kettenlänge des Alkylrestes von 6 bis 12 C-Atomen,
b) 24,9 bis 45 Gew.% wenigstens eines nichtfluorierten Acrylats und
c) 0,1 bis 5 Gew.% wenigstens eines Photoinitiators.

2. Abformzusammensetzung gemäß Anspruch 1, **dadurch gekennzeichnet, dass** das perfluorierte Acrylat linear, verzweigt und/oder cyclisch ist, und bei dem die an die Acrylatfunktion angrenzenden Kohlenstoffatome nicht fluoriert sind.

3. Abformzusammensetzung gemäß Anspruch 1, **dadurch gekennzeichnet, dass** das perfluorierte Acrylat in einer Menge von 55 bis 65 Gew.% enthalten ist.

4. Abformzusammensetzung gemäß Anspruch 1, **dadurch gekennzeichnet, dass** das nichtfluorierte Acrylat in einer Menge von wenigstens 34,9 enthalten ist.

5. Abformzusammensetzung gemäß Anspruch 1, **dadurch gekennzeichnet, dass** die Photoinitiatoren in einer Menge von 1 bis 2 Gew.% enthalten sind.

6. Abformzusammensetzung gemäß Anspruch 1, **dadurch gekennzeichnet, dass** sie eine Viskosität in einem Bereich von 2 bis 30 mPas aufweist.

7. Abformzusammensetzung gemäß Anspruch 1, **dadurch gekennzeichnet, dass** sie aus einer einzigen, insbesondere homogenen flüssigen Phase besteht.

## Claims

1. Solvent-free impression composition having a density within a range of from 1 to 1.5 g/ml, containing:
a) from 50 to 65% by weight of at least one 1H, 1H, 2H, 2H-perfluoroalkyl acrylate having a chain length of the alkyl residue of from 6 to 12 carbon atoms;
b) from 24.9 to 45% by weight of at least one non-fluorinated acrylate; and
c) from 0.1 to 5% by weight of at least one photoinitiator.

2. The impression composition according to claim 1, **characterized in that** said perfluorinated acrylate is linear, branched and/or cyclic, and in which the carbon atoms adjacent to the acrylate function are not fluorinated.

3. The impression composition according to claim 1, **characterized in that** said perfluorinated acrylate is contained in an amount of from 55 to 65% by weight.

4. The impression composition according to claim 1, **characterized in that** said non-fluorinated acrylate is contained in an amount of at least 34.9.

5. The impression composition according to claim 1, **characterized in that** said photoinitiators are contained in an amount of from 1 to 2% by weight.

6. The impression composition according to claim 1, **characterized by** having a viscosity within a range of from 2 to 30 mPa·s.

7. The impression composition according to claim 1, **characterized by** consisting of a single, especially homogeneous, liquid phase.

## Revendications

1. Composition à empreinte exempt de solvant avec une densité dans une gamme allant de 1 à 1,5 g/ml, contenant :
a) de 50 à 65 % en poids d'au moins un acrylate de 1H, 1H, 2H, 2H-perfluoroalkyle avec une longueur de chaîne du groupe alkyle de 6 à 12 atomes de carbone ;
b) de 24,9 à 45 % en poids d'au moins un acrylate non-fluoré ;
c) de 0,1 à 5 % en poids d'au moins un photoinitiateur.

2. Composition à empreinte selon la revendication 1, **caractérisée en ce que** ledit acrylate perfluoré est linéaire, ramifié et/ou cyclique, et dans lequel les atomes de carbone voisins à la fonction acrylate ne sont pas fluorés.

3. Composition à empreinte selon la revendication 1, **caractérisée en ce que** ledit acrylate perfluoré est contenu dans une quantité de 55 à 65 % en poids.

4. Composition à empreinte selon la revendication 1, **caractérisée en ce que** ledit acrylate non-fluoré est contenu dans une quantité d'au moins 34,9.

5. Composition à empreinte selon la revendication 1, **caractérisée en ce que** lesdits photoinitiateurs sont contenus dans une quantité de 1 à 2 % en poids.

6. Composition à empreinte selon la revendication 1, **caractérisée en ce qu'**elle a une viscosité dans une gamme allant de 2 à 30 mPa·s.

7. Composition à empreinte selon la revendication 1, **caractérisée en ce qu'**elle consiste en une seule phase liquide, notamment homogène.
